# EUROPEAN PATENT SPECIFICATION

(11) **EP 1 350 059 B1**
(45) Date of publication and mention of the grant of the patent: **30.08.2006**
(21) Application number: 01270729.5
(22) Date of filing: 27.11.2001
(51) Int. Cl.: F21S 8/00, G09F 13/04, G02B 5/02

(54) **LIGHTING APPARATUS**
BELEUCHTUNGSVORRICHTUNG
DISPOSITIF D'ECLAIRAGE

(30) Priority: 12.12.2000 GB 0030301
(43) Date of publication of application: 08.10.2003
(73) Proprietor: Direct Message (UK) Limited, Manchester M30 7JW (GB)
(72) Inventor: STEPHENSON, John, Sunningdale, Berkshire SL5 0DB (GB)
(74) Representative: Howe, Steven
(86) International application number: PCT/GB2001/005247
(87) International publication number: WO 2002/048604

(56) References cited:
- EP-A- 0 446 739
- US-A- 5 669 700

## Description

The present invention relates to lighting apparatus, especially to lighting apparatus for uniformly illuminating a large area, for example for signage. Such lighting apparatus has other applications, for example light boxes for viewing slides and transparencies, X-rays and the like.

The use of signage is ubiquitous in society. It is widely utilised to inform viewers on matters such as safety, directions, public information and advertising. Whilst signs may be illuminated or non-illuminated, advertisers favour illuminated signs as they attract attention by day and are still effective at night. The great majority of advertising signs inside buildings are illuminated. Further, signs giving safety, direction or public information may be required to be visible even in poor light, and in many cases this is when the information is most important. Therefore, such signs are desirably illuminated.

Illumination of signs may be from an external light source directed on to the front of the sign, or from light sources located behind a translucent sign formed of glass, plastic or reinforced paper, for example. Back illuminated signs are often preferred, as they are more reliable. The light sources, the control equipment and the sign itself are enclosed within a box and thus protected from the elements and vandalism. However, they have the drawback that much more light energy is needed to achieve the same level of light output as an equivalent front illuminated sign because light is absorbed by the translucent sign itself.

Because of the need to limit the weight of signs for handling purposes, to make maximum use of space available on sites and to improve the aesthetic appeal of signs, light boxes for back illuminated signs have to be relatively slim. This means that the illuminated face of the light box is rarely more than 200mm and often as little as 25mm from what is normally an intense light source such as a fluorescent lamp. Unless a diffusing medium is placed between the fluorescent lamps and the face of the light box, the lamps are visible as bright stripes and significantly degrade the legibility of the advertising or information message graphics.

A common method of reducing this "striping" effect is to install a diffuser, usually an opal acrylic or fibre glass sheet, which covers the full area of the light box, between the lamps and the translucent sign. Light entering the diffuser is diffused within the diffuser. A problem with the use of a diffuser or light homogenising mask is that all of the light emitted by the light source is incident on the mask, and therefore the mask must be dense, Therefore, such a diffuser typically absorbs 60% or more of the generated light. Light is also absorbed by the metal interior of the light box and the exposed wiring and electrical components. With this system, around 75% of the light emitted by the fluorescent lamps may be lost in absorption. Also, due to the required density of the mask, the overall weight of the lighting apparatus may be unacceptably high.

A second known method to reduce "striping" is to use a larger number of fluorescent lamps, which are closely spaced together in a relatively deep box. This configuration does not include a diffuser panel, but uses a thicker advertising poster, usually formed of vinyl, that acts as a limited area diffuser of the light. The higher cost of the heavier vinyl advertising posters is a serious drawback, particularly in outdoor advertising in which advertising posters are normally changed every two weeks. A further disadvantage of this method is that more lamps and control gear are required and therefore the likelihood of component failure is increased. Maintenance and supervision costs are also higher.

Another method for reducing striping is the provision of a differential transmitter in front of the lamps. This differential transmitter comprises a sheet of generally transparent material onto which is formed a reflective pattern, for example by screen printing a reflective material on the transparent substrate. The reflective material may be applied in a pattern of dots or lines. In the regions closest to the lamp, the reflective pattern is of greater density than in regions further from the lamp. In this way, a larger proportion of the light incident on the parts of the differential transmitter near the lamp will be reflected, and not transmitted through the transmitter than in regions further from the lamp. Since the intensity of illumination from the lamp on the transmitter will be greater closer to the lamp, the overall effect is for uniform transmitted light through the transmitter. In general, there will be large areas of the differential transmitter that block transmission of light.

Since the differential transmitter includes a discrete reflective pattern, light will not pass uniformly through each point of the transmitter, as at some points the reflective material will block this. Therefore, a diffuser is positioned on the opposite side of the differential transmitter from the lamp. The diffuser is spaced from the differential transmitter. This helps prevent the differential transmitter being "seen" and helps give the desired uniform intensity illumination.

A problem with the use of differential transmitters is that the large regions of reflective material block the light, and therefore typically over 50% of the light generated by the light source is not transmitted to illuminate the sign. Further, the differential transmitter decreases the efficiency of the diffuser.

EP-A1-0 446 739 discloses a lighting apparatus according to the preamble of claim 1.

According to the present invention, lighting apparatus comprises a light source, a diffusive/reflective layer located in front of the light source and arranged to diffusely reflect and transmit light from the light source, and a differential transmitter located on the opposite side of the diffusive/reflective layer to the light source for controlling the transmission of the light passed through the diffusive/reflective layer.

With the present invention, the light emitted from the light source is incident on the reflective/diffusive layer. This layer reflects a significant part of the incident light. The reflected light can undergo multiple reflections before this passes into the reflective/diffusive layer where the light is diffused. The light that is not reflected is diffused by the reflective/diffusive layer. Due to the reduction in the amount of light that passes directly into the diffusive layer compared to other systems, the reflective/diffusive layer may be made thinner, reducing the weight of the apparatus and increasing efficiency.

Unlike the previous systems in which the differential transmitter is located in front of the lamp or other light source, and the diffuser is provided in front of the differential transmitter to diffuse the limited amount of light transmitted through the differential transmitter, according to the present invention some of the light from the lamp is diffused by the diffusive/reflective layer. This light is differentially transmitted by the differential transmitter. With this arrangement, the efficiency of the diffusive/reflective layer is not hindered by the imposition of the differential transmitter. Instead, the diffusive/reflective layer diffuses some of the light from the light source and reflects other light. The total area covered by the differential transmitter can be much smaller in area than if it was placed in front of the reflective/diffusive area and facing the light source. This further improves the efficiency of the device. This gives a more uniform and more suitable illumination than from the lamp itself. However, the light transmitted through the diffusive/reflective layer will still include stripes of different intensity. The inclusion of the differential transmitter reduces this effect, and gives more uniform light intensity.

Due to the relative arrangement of the diffusive/reflective layer and the differential transmitter, there is no requirement for a gap between the diffusive/reflective layer and the differential transmitter. Therefore, the differential transmitter can be positioned close to or in contact with the diffusive/reflective layer. This reduces the overall size of the lighting apparatus, which is of particular benefit when used for signage. In particular, as there is no requirement for the diffusive/reflective layer and differential transmitter to be spaced apart, the diffusive/reflective layer and differential transmitter may be formed on a single substrate. In this way, the overall weight of the lighting apparatus can be reduced. This is of benefit, especially where the lighting apparatus is to be suspended.

The differential transmitter may be provided only in areas close to the light source or lamp. In regions more distant from the light source, where the light passing through the diffusive/reflective layer is more uniform, the differential transmitter may be omitted. This is of advantage since, where there is no differential transmitter, the light passing through the diffusive/reflective layer will not be further absorbed, as may occur where the light passes through even a transparent portion of a differential transmitter.

The diffusive/reflective layer preferably reflects a large proportion of the light incident thereon, and transmits a smaller proportion of the light. Preferably, the diffusive/reflective layer reflects at least 60% of the incident light, more preferable at least 75% of the light. Ideally around 85% of the incident light is reflected. A preferred material for the diffusive/reflective layer is Graphic Film 9407 available from 3M.

A reflective surface is advantageously provided behind the diffusive/reflective layer, namely on the same side of the layer as the light source. This highly reflective rear surface advantageously also diffuses the incident light. This reflects light that is itself diffusely reflected by the diffusive/reflective layer, and thereby the light reflected by the diffusive/reflective layer is re-reflected towards the front of the lighting apparatus and so is not lost.

It is advantageous for a large proportion of the light incident on the diffusive/reflective layer to be diffusely reflected, since this acts to spread the light over the area of the diffusive/reflective layer by subsequent reflections. Since only that light passing through the diffusive/reflective layer passes through the differential transmitter, and only the light passing through the diffusive/reflective layer close to the light source is greatly effected by a large amount of reflective material on the differential transmitter, this spreading of light means that less light is blocked and lost by the differential transmitter than would otherwise be the case. Further, by the provision of the differential transmitter on the opposite side of the diffusive/reflective layer to the light source, the light reflected by the diffusive/reflective layer is not impeded by the differential transmitter, as would be the case if the differential transmitter were provided between the light source and the diffusive/reflective layer. Therefore, the light reflected by the diffusive/reflective layer is able to undergo multiple internal reflections without being hindered.

It is believed that the multiple reflections of the light act to vertically polarise the light, such that light waves vibrate in the direction of travel. The light waves will therefore penetrate the reflective medium at greater angles of incidence than would otherwise be the case, ensuring that all light emitted from the light source is transmitted.

In a preferred example, a diffusive/reflective layer is provided on each side of the light source, with associated differential transmitters on the opposite side of the diffusive/reflective layers to the light source. In this way, light reflected off one diffusive/reflective layer will be incident on the other diffusive/reflective layer, with part of the reflected light being transmitted through the opposite diffusive/reflective layer, and some of the light being re-reflected. In this way, the lighting apparatus is able to provide to opposite uniformly illuminated surfaces.

In a preferred example, the reflective pattern of the differential transmitter is formed by depositing reflective material on a generally transparent substrate.

This substrate may be in the form of a film. Material may be deposited on the substrate by any suitable means, for example by screen printing suitable ink, or by ink jet printing or other means. Alternatively, the desired transmission characteristics may be achieved by etching the substrate. Further still, the reflective pattern may be formed on the rear surface of the diffusive/reflective layer, for example by depositing reflective material on the layer.

Where the reflective pattern is formed on a film, for example on a transparent film or on the rear side of the diffusive/reflective layer, it is preferred that this film is suspended near the light source. In this case, it is preferred that the film is tensioned. This will help maintain the required distance between the light source and the differential transmitter to maintain the required properties of light distribution.

Where the reflective pattern is formed on an outer surface, for example where this is formed directly on the diffusive/reflective layer or on the rear side of a substrate or film, there is a risk that the pattern may become damaged, for example during cleaning, especially where abrasive materials are used. It is therefore preferred that a transparent or highly translucent coating is applied over the reflective pattern. The coating may be in the form of an abrasion resistant lacquer, and may be applied by spraying, rolling or other suitable method. Alternatively or additionally, a transparent film may be laminated to the differential transmitter to form the finished product to give an attractive product.

A thin transparent substrate may be provided in front of the differential transmitter. This protects the reflective pattern. This is of particular importance where the lighting apparatus is used for back-illumination of posters or other signs, especially where these are frequently changed. Without the protective substrate, the components of the lighting apparatus, and in particular the reflective pattern, will be exposed, and could be damaged. Further, the inclusion of such a sheet helps prevent the illumination pattern due to the differential transmitter from being seen. The transparent substrate may be in the form of an acrylic sheet, preferably of around 3mm thickness.

Examples according to the present invention will be described with reference to the accompanying drawings, in which:
Figure 1 shows a cross-section through a lighting apparatus according to the present invention;
Figure 2 shows a panel comprising a differential transmitter and a diffusive/reflective layer for use in the lighting apparatus of Figure 1;
Figure 3 shows a pattern of reflective dots for the differential transmitter;
Figure 4 shows an alternative example of the lighting apparatus according to the present invention; and,
Figure 5 shows a cross-sectional view through a double-sided sign.

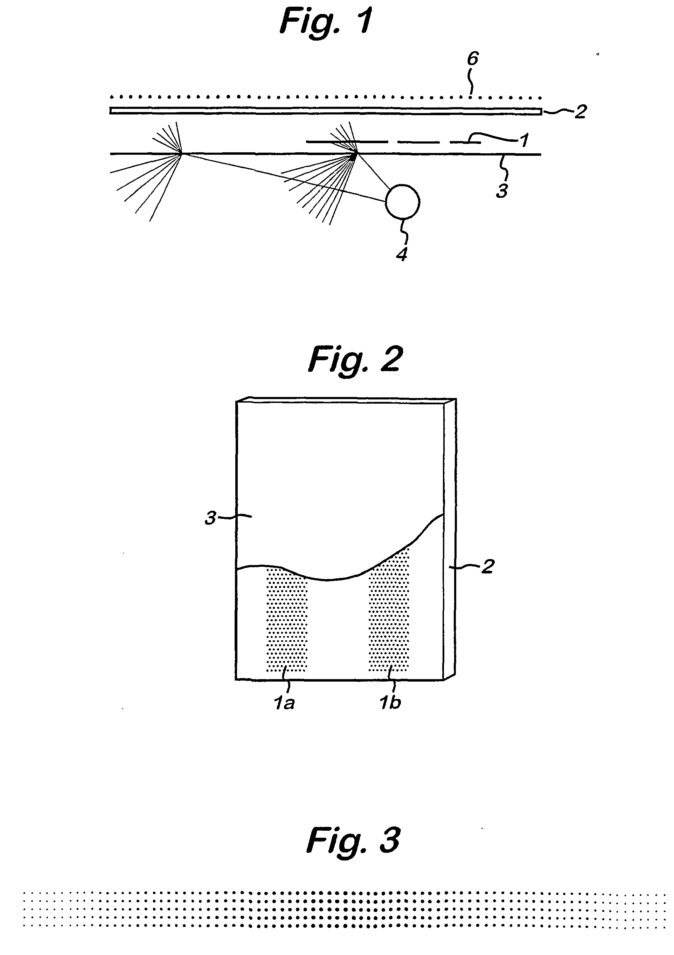

Figure 1 shows a schematic cross-sectional view of the lighting apparatus according to the present invention. The apparatus includes a lamp 4, for example in the form of a fluorescent strip lamp. In front of the lamp 4, there is provided a diffusive/reflective film 3 for example Graphic Film 9407 available from 3M. The film 3 diffusely reflects around 85% of light incident on it, and diffusely transmits the remaining incident light.

In the regions close to the lamp 4, the intensity of light transmitted through the diffusive/reflective layer 3 will be greater than at locations more distant from the lamp 4. Accordingly, in front of the diffusive/reflective layer 3 in the regions close to the lamp 4, there is provided a differential transmitter 1. In one example, this comprises a generally transparent substrate, which may be in the form of a solid block or a film, on which is printed a pattern of reflective dots, as shown in Figures 2 and 3.

In front of the differential transmitter, there is provided a transparent sheet 2, for example of 3mm thick acrylic. A poster 6, or other sign to be illuminated, may be supported by the substrate 2. In the example shown in Figure 2, the diffusive/reflective layer 3, the differential transmitter 1 and the substrate 2 are laminated together.

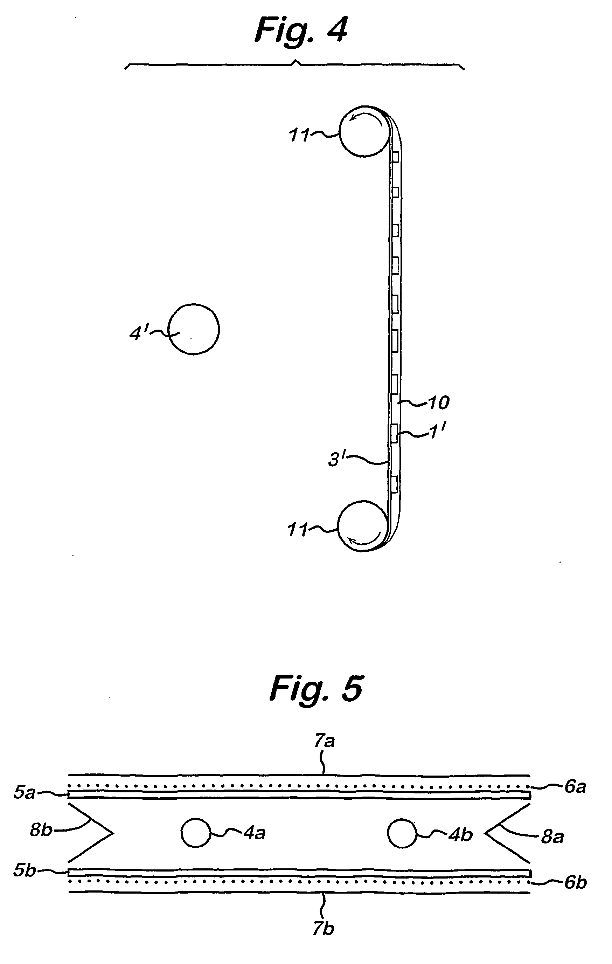

In an alternative example shown in Figure 4, a reflective pattern 1' forming the differential transmitter is formed by depositing reflective material on the rear surface of the diffusive/reflective film layer 3'. The reflective pattern is coated with a transparent lacquer 10 that protects the reflective pattern 1' from damage, for example due to rough handling or the use of abrasive materials for cleaning the apparatus. Since the resulting diffusive/reflective film layer 3' and reflective pattern 1' will be thin, and therefore flexible, the film is tensioned using rollers 11. By tensioning the film, it is ensured that a constant spacing is maintained between the light source 4' and the diffusive/reflective layer 3' and differential transmitter.

In use, light from the lamp 4 is incident on the diffusive/reflective layer 3. The diffusive/reflective layer 3 diffusely reflects the majority of the incident light. However, some of the light is diffusely transmitted through the diffusive/reflective layer 3, and this transmitted light is able to pass through the transparent substrate 2 to backlight the poster 6 supported thereby. The light reflected by the diffusive/reflective layer 3 is re-reflected from a highly reflective substrate provided behind the lamp 4. This re-reflected light will be incident upon the diffusive/reflective layer 3, and again some of this light will be diffusely transmitted through the diffusive/reflective layer 3 to backlight the poster, whilst the rest of the light will again be reflected. The multiple internal reflections of the light increases the vertical polarisation of the light, which allows the light to penetrate the diffusive/reflective layer at greater angles of incidence. This polarised light improves contrast. It is well known that a 1% increase in contrast is equivalent to a 15% increase in illumination. The internal reflection of light spreads the light over the surface to be illuminated. Although only a small proportion of the light from each reflection is transmitted through the diffusive/reflective layer 3, due to the large number of multiple internal reflections, the overall transmitted light flux is high.

Although the diffusive/reflective layer 3 will assist in providing even illumination across the apparatus, in the regions close to the light source 4, bright stripes may occur, since in these regions there will be more intense illumination on the diffusive/reflective layer 3. Accordingly, in these regions, a differential transmitter 1 is provided. In one example, the differential transmitter 1 includes a generally transparent substrate, for example of 3mm thick toughened acrylic. In another example, the substrate may be a thin film, or as shown in the example of Figure 4, the differential transmitter may be formed by depositing reflective material directly onto the rear of the diffusive/reflective layer.

The differential transmitter may be provided, for example by screen-printing an array of dots of reflective material, for example as shown in Figure 3. The dots of reflective material have a spacing of around 3mm, and have varying radii along the width of the pattern. In particular, the dots are of largest diameter near the centre of the pattern, close to the source of the light, with gradually decreasing size towards the edges of the pattern. In this way, the larger amount of reflective material near the light source 4 ensures that there is a lower proportion of transmitted light through this region than where the dots of reflective material are smaller. The reflective material may be a silver colour, although in other examples may be of different colours.

As an alternative to dots, lines of reflective material of varying thickness may be provided. For example, the lines near the source of illumination may be thick, with the lines further from the centre being progressively thinner, or with lines of a given thickness, lines may be less dense near the most intense part of the illumination and become progressively less dense.

In regions remote from the light source 4, there may be an absence of reflective material. In this case, the differential transmitter 1 may be omitted in this regions, with a differential transmitter 1 provided only in those portions close to the light source 4.

The effect of the differential transmitter 1 is to reduce the proportion of light transmitted through the diffusive/reflective layer 3 from being incident on the poster 6, and in particular to reflect the greatest proportion of light in the regions close to the light source 4, where the illumination is of the greatest intensity. This, therefore, helps give a uniform level of light intensity across the entire surface of the apparatus.

A further example of the present invention is shown in Figure 5. In this case, the apparatus is a double-sided light box, designed to provide uniform illumination on two sides. Two lamps 4a, 4b are shown (although it will be appreciated that any number of lamps may be provided). On either side of the lamps 4a, 4b there is provided a diffusive/reflective layer 5a, 5b, and, on the opposite side of the diffusive/reflective layers 5a, 5b to the lamps 4a, 4b, there is provided a differential transmitter 6a, 6b. The differential transmitter 6a, 6b comprises a reflective pattern screen printed or otherwise formed onto the surface of the diffusive/reflective layer 5a, 5b remote from the lamps 4a, 4b. A glass or other transparent substrate 7a, 7b is provided to support posters or other images or items to be illuminated.

In use, a large proportion of the light from the lamps 4a, 4b is reflected from one of the diffusive/reflective layers 5a, 5b. This reflected light is incident on the other diffusive/reflective layer 5a, 5b, and a large percentage of this light is re-reflected. In this way, there will be a large number of internal reflections between the diffusive/reflective layers 5a, 5b. On each reflection, a small percentage of the light will be diffusely transmitted through the diffusive/reflective layer 5a, 5b. Much of the diffusely transmitted light will be incident on the glass substrate 7a, 7b. However, a proportion of the diffusely transmitted light will be reflected by the differential transmitters 6a, 6b. A larger proportion of the diffusely transmitted light will be blocked in regions close to the lamps than further from the lamps. V-shaped reflectors 8a, 8b are provided at either end of the apparatus to reflect light at the ends of the apparatus. The reflectors may be extruded from plastics or metal, for example steel. And may be coated with diffusely reflective paint, for example by powder coating.

## Claims

1. A lighting apparatus comprising a light source (4), a diffusive/reflective layer (3) located in front of the light source (4) and arranged to diffusely reflect and transmit light from the light source (4), **characterised in that** a differential transmitter (1) is located on the opposite side of the diffusive/reflective layer (3) in relation to the light source (4) for controlling the transmission of the light passed through the diffusive/reflective layer (3).

2. A lighting apparatus according to Claim 1, in which the differential transmitter (1) is positioned close to the diffusive/reflective layer (3).

3. A lighting apparatus according to Claim 1, in which the differential transmitter (1) is positioned in contact with the diffusive/reflective layer (3).

4. A lighting apparatus according to Claim 3, in which the diffusive/reflective layer (3) and differential transmitter (1) are formed on a single substrate.

5. A lighting apparatus according to Claim 4, in which the differential transmitter (1) comprises a reflective pattern formed on the rear of the diffusive/reflective layer (3).

6. A lighting apparatus according to any one of Claims 1 to 3, in which the differential transmitter (1) comprises a reflective pattern formed on a substantially transparent film.

7. A lighting apparatus according to Claim 5 or Claim 6, in which a substantially transparent layer is formed over the reflective pattern.

8. A lighting apparatus according to any one of the preceding Claims, in which the differential transmitter (1) s provided only in areas close to the light source.

9. A lighting apparatus according to any one of the preceding Claims, in which a thin transparent substrate is provided in front of the differential transmitter (1).

10. A lighting apparatus according to Claim 9, in which the transparent substrate is in the form of an acrylic sheet, preferably of around 3mm thickness.

11. A lighting apparatus according to any one of the preceding claims, in which the diffusive/reflective layer (3) is a film.

12. A lighting apparatus according to any one of the preceding Claims, in which the diffusive/reflective layer (3) reflects at least 50% of the light incident thereon.

13. A lighting apparatus according to Claim 12, in which the diffusive/reflective layer (3) reflects at least 60% and ideally around 85% of the incident light.

14. A lighting apparatus according to any one of the preceding Claims, in which a reflective surface is provided behind the diffusive/reflective layer (3), namely on the same side as the light source (4).

15. A lighting apparatus according to Claim 14, in which the reflective rear surface also diffuses the incident light.

16. A lighting apparatus according to any one of the preceding Claims, in which a diffusive/reflective layer (3) is provided on each side of the light source, with associated differential transmitters (1) on the opposite side of the diffusive/reflective layers (3) to the light source.

## Patentansprüche

1. Beleuchtungsvorrichtung mit einer Lichtquelle (4), einer Diffusions-/Reflektionschicht (3), die vor der Lichtquelle (4) liegt und so angeordnet ist, dass sie Licht von der Lichtquelle (4) diffus reflektiert und überträgt, **dadurch gekennzeichnet, dass** ein Differentialtransmitter (1) auf der entgegengesetzten Seite der Diffusions-/Reflektionsschicht (3) in Bezug zur Lichtquelle (4) liegt, um die Übertragung des durch die Diffusions-/Reflektionsschicht (3) hindurch gegangenen Lichts zu steuern.

2. Beleuchtungsvorrichtung nach Anspruch 1, in welcher der Differentialtransmitter (1) nahe der Diffusions-/Reflektionsschicht (3) positioniert ist.

3. Beleuchtungsvorrichtung nach Anspruch 1, in welcher der Differentialtransmitter (1) in Kontakt mit der Diffusions-/Reflektionsschicht (3) positioniert ist.

4. Beleuchtungsvorrichtung nach Anspruch 3, in welcher die Diffusions-/Reflektionsschicht (3) und der Differentialtransmitter (1) auf ein und demselben Substrat ausgebildet sind.

5. Beleuchtungsvorrichtung nach Anspruch 4, in welcher der Differentialtransmitter (1) ein Reflektionsmuster umfasst, das auf der Rückseite der Diffusions-/Reflektionsschicht (3) ausgebildet ist.

6. Beleuchtungsvorrichtung nach einem der Ansprüche 1 bis 3, in welcher der Differentialtransmitter (1) ein Reflektionsmuster umfasst, das auf einem im Wesentlichen lichtdurchlässigen Film ausgebildet ist.

7. Beleuchtungsvorrichtung nach Anspruch 5 oder 6, in welcher eine im Wesentlichen lichtdurchlässige Schicht über dem Reflektionsmuster ausgebildet ist.

8. Beleuchtungsvorrichtung nach einem der vorstehenden Ansprüche, in welcher der Differentialtransmitter (1) nur in Bereichen nahe der Lichtquelle vorgesehen ist.

9. Beleuchtungsvorrichtung nach einem der vorstehenden Ansprüche, in welcher ein dünnes lichtdurchlässiges Substrat vor dem Differentialtransmitter (1) vorgesehen ist.

10. Beleuchtungsvorrichtung nach Anspruch 9, in welcher das lichtdurchlässige Substrat in Form einer Acryllage, vorzugsweise von etwa 3 mm Dicke vorliegt.

11. Beleuchtungsvorrichtung nach einem der vorstehenden Ansprüche, in welcher die Diffusions-/Reflektionsschicht (3) ein Film ist.

12. Beleuchtungsvorrichtung nach einem der vorstehenden Ansprüche, in welcher die Diffusions-/Reflektionsschicht (3) wenigstens 50% des auf sie einfallenden Lichts reflektiert.

13. Beleuchtungsvorrichtung nach Anspruch 12, in welcher die Diffusions-/Reflektionsschicht (3) wenigstens 60% und idealerweise etwa 85% des einfallenden Lichts reflektiert.

14. Beleuchtungsvorrichtung nach einem der vorstehenden Ansprüche, in welcher eine Reflektionsfläche hinter der Diffusions-/Reflektionsschicht (3) vorgesehen ist, und zwar auf der gleichen Seite wie die Lichtquelle (4).

15. Beleuchtungsvorrichtung nach Anspruch 14, in welcher die rückseitige Reflektionsfläche das einfallende Licht auch streut.

16. Beleuchtungsvorrichtung nach einem der vorstehenden Ansprüche, in welcher die Diffusions-/Reflektionsschicht (3) auf jeder Seite der Lichtquelle, mit zugehörigen Differentialtransmittern (1) auf der entgegengesetzten Seite der Diffusions-/Reflektionsschichten (3) zur Lichtquelle, vorgesehen ist.

## Revendications

1. Dispositif d'éclairage comportant une source de lumière (4), une couche diffusante/réflectrice (3) située devant la source de lumière (4) et conçue pour réfléchir et transmettre de manière diffuse une lumière provenant de la source de lumière (4), **caractérisé en ce qu'**un émetteur différentiel (1) est situé sur le côté opposé de la couche diffusante/réflectrice (3) par rapport à la source de lumière (4) pour commander la transmission de la lumière passée à travers la couche diffusante/réflectrice (3).

2. Dispositif d'éclairage selon la revendication 1, dans lequel l'émetteur différentiel (1) est positionné à proximité de la couche diffusante/réflectrice (3).

3. Dispositif d'éclairage selon la revendication 1, dans lequel l'émetteur différentiel (1) est positionné en contact avec la couche diffusante/réflectrice (3).

4. Dispositif d'éclairage selon la revendication 3, dans lequel la couche diffusante/réflectrice (3) et l'émetteur différentiel (1) sont formés sur un substrat unique.

5. Dispositif d'éclairage selon la revendication 4, dans lequel l'émetteur différentiel (1) présente un motif réflecteur formé sur la partie arrière de la couche diffusante/réflectrice (3).

6. Dispositif d'éclairage selon l'une quelconque des revendications 1 à 3, dans lequel l'émetteur différentiel (1) présente un motif réflecteur formé sur un film essentiellement transparent.

7. Dispositif d'éclairage selon la revendication 5 ou la revendication 6, dans lequel une couche essentiellement transparente est formée sur le motif réflecteur.

8. Dispositif d'éclairage selon l'une quelconque des revendications précédentes, dans lequel l'émetteur différentiel (1) est placé uniquement dans des zones proches de la source de lumière.

9. Dispositif d'éclairage selon l'une quelconque des revendications précédentes, dans lequel un substrat transparent mince est placé devant l'émetteur différentiel (1).

10. Dispositif d'éclairage selon la revendication 9, dans lequel le substrat transparent est sous la forme d'une feuille acrylique, de préférence d'une épaisseur d'environ 3 mm.

11. Dispositif d'éclairage selon l'une quelconque des revendications précédentes, dans lequel la couche diffusante/réflectrice (3) est un film.

12. Dispositif d'éclairage selon l'une quelconque des revendications précédentes, dans lequel la couche diffusante/réflectrice (3) réfléchit au moins 50 % de la lumière incidente.

13. Dispositif d'éclairage selon la revendication 12, dans lequel la couche diffusante/réflectrice (3) réfléchit au moins 60 % et idéalement environ 85 % de la lumière incidente.

14. Dispositif d'éclairage selon l'une quelconque des revendications précédentes, dans lequel une surface réflectrice est agencée derrière la couche diffusante/réflectrice (3), c'est-à-dire sur le même côté que la source de lumière (4).

15. Dispositif d'éclairage selon la revendication 14, dans lequel la surface arrière réflectrice diffuse également la lumière incidente.

16. Dispositif d'éclairage selon l'une quelconque des revendications précédentes, dans lequel une couche diffusante/réflectrice (3) est agencée sur chaque côté de la source de lumière, avec des émetteurs différentiels associés (1) sur le côté opposé des couches diffusantes/réflectrices (3) par rapport à la source de lumière.
